# EUROPÄISCHE PATENTSCHRIFT

(11) **EP 2 019 219 B1**
(45) Veröffentlichungstag und Bekanntmachung des Hinweises auf die Patenterteilung: **20.01.2010**
(21) Anmeldenummer: 07014586.7
(22) Anmeldetag: 25.07.2007
(51) Int. Cl.: F16D 1/08

(54) **Verbindung zweier um eine gemeinsame Rotationsachse drehbare Körper**
Connection of two bodies which can be rotated around a common rotation axis
Liaison de deux corps rotatifs sur un même axe de rotation

(43) Veröffentlichungstag der Anmeldung: 28.01.2009
(73) Patentinhaber: Centa-Antriebe Kirschey GmbH, 42781 Haan (DE)
(72) Erfinder: Kirschey, Gerhard, 42329 Wuppertal (DE)
(74) Vertreter: Ostriga, Sonnet, Wirths & Roche

(56) Entgegenhaltungen:
- CH-A- 274 958
- FR-A- 1 178 866
- JP-A- 8 210 110
- US-A1- 2006 040 750

## Beschreibung

Die Erfindung betrifft eine drehfeste Verbindung zweier um eine gemeinsame Rotationsachse drehbarer Körper, umfassend einen ersten inneren Rotationskörper und einen damit über eine Fügeflächenpaarung miteinander zu verbindenden bzw. verbundenen zweiten äußeren Rotationskörper, wobei zur Drehmomentübertragung Mitnehmerstifte vorgesehen sind, die in zur Rotationsachse paralleler Richtung verlaufende Bohrungen eingepresst sind, welche im Bereich der Fügeflächenpaarung in den beiden Rotationskörpern jeweils etwa zum halben Umfang ausgebildet sind, und wobei eine in Richtung der Rotationsachse wirkende Verschraubung die beiden Rotationskörper axialfest zueinender sichert, entsprechend dem Anspruch 1. Insbesondere bezieht sich die Erfindung auf eine Flanschnabe für Kupplungen zur Drehverbindung von Maschinenteilen.

Bei einer Verbindung zweier um eine gemeinsame Rotationsachse drehbarer Körper ist es zur betriebsmäßigen Übertragung eines Drehmoments über die miteinander verbundenen Körper wichtig, dass die Verbindungsmittel möglichst auf Druck und nicht auf Scherung beansprucht werden. Aus diesem Grund haben sich Mitnehmerstifte bewährt, die in zur Rotationsachse paralleler Richtung verlaufende Bohrungen eingepresst sind, welche im Bereich der Fügeflächenpaarung in den beiden Rotationskörpern jeweils etwa zum halben Umfang ausgebildet sind.

Ein Beispiel einer derartigen Verbindung, von der die Erfindung ausgeht, ist in CH 274 958 dargestellt und beschrieben. Der erste innere Rotationskörper ist hierbei eine Welle und der zweite äußere Rotationskörper eine Schwungscheibe, die mittels der erwähnten Mitnehmerstifte auf Drehmitnahme gekuppelt sind. Dabei kuppeln die Mitnehmerstifte im übrigen noch eine der Schwungscheibe benachbarte Druckhülse ebenfalls mit der Welle. Das Wellenende ist als Gewindezapfen ausgebildet, so dass mittels einer darauf aufgeschraubten Mutter Schwungscheibe und Welle in axialer Richtung aneinander fixiert werden können.

Verbindungen der beschriebenen Art können überall dort angewendet werden, wo es darauf ankommt, wenigstens zwei miteinander um eine gemeinsame Rotationsachse drehende oder angetriebene Maschinenelemente im Sinne einer hervorragenden Drehmomentübertragung miteinander zu kuppeln.

Da mit der in CH 274 958 beschriebenen Verbindung keine Hohlweile unmittelbar mit der Schwungscheibe drehgekuppelt und zugleich axial gesichert werden kann, liegt der vorliegenden Erfindung die Aufgabe zugrunde, Mittel und Wege aufzuzeigen, wie dies auf einfache Art und Weise erreichbar ist. Der Erfindung liegt des weiteren der Gedanke zugrunde, eine drehfeste Verbindung mit Hilfe von die Rotationskörper kuppelnden Mitnehmerstiften der bekannten Art zur preiswerten Herstellung einer Flanschnabe mit einer hohlzylindrischen Nabe und einer damit drehfest zu verbindenden Ringscheibe als Flansch zu nutzen.

In der Antriebstechnik werden z.B. bei elastischen Kupplungen für Schiffsantriebe Flanschnaben erheblicher Baugrößen eingesetzt. Deren Herstellung erfolgt bislang vornehmlich im Wege spangebender Verformung z.B. aus einer Stahlgussstange. Dies erfordert besonders große und leistungsfähige maschinelle Einrichtungen und unverhältnismäßig große Mengen an Material und verursacht überdies beträchtlichen Abfall beim Zerspanen des Werkstücks. Besonders gravierend ist der Mangel an Flexibilität in der Verfügbarkeit, da kaum alle in Frage kommenden Baugrößen an Rohlingen bevorratet werden können.

Unter Verwendung einer Verbindung, von der die Erfindung ausgeht, könnten Nabe und Flansch auf jeweils einfachere und kostengünstigere Weise gesondert hergestellt und mittels der bekannten Verbindungstechnik drehfest miteinander verbunden werden. Der Nabenkörper könnte aus Stangen- oder Rohrmaterial gedreht bzw. überdreht und der Flansch als Ringscheibe hergestellt werden. Alle beschriebenen Nachteile wären damit beseitigt. Demzufolge ist es auch Aufgabe der Erfindung, in dieser Hinsicht einen Beitrag zu leisten.

Eine erste Verbindung, die die Aspekte der Erfindung berücksichtigt, ist im ersten unabhängigen Anspruch 1 angegeben und dadurch gekennzeichnet, dass die Fügeflächenpaarung als zylindrische Flächenpaarung ausgebildet ist und als Verschraubung Schraubbolzen vorgesehen sind, die, zu den Mitnehmerstifte umfangsversetzt, in als Gewindebohrungen ausgebildete Axialbohrungen eingeschraubt sind, welche gleichfalls in den beiden Rotationskörpern ausgebildet sind, wobei es als besonders vorteilhaft angesehen wird, wenn die Schraubbolzen auf demselben Teilkreis wie die Mitnehmerstifte angeordnet sind.

Im Unterschied zu der in CH 274 958 beschriebenen Verbindung ist es damit auf einfache Weise möglich, hohlzylindrische Naben statt massiver Wellen mit scheibenförmigen Rotationskörpern wie Schwungscheiben oder Flansche nicht nur drehfest, sondern auch axial gesichert miteinander zu einer gemeinsam rotierbaren Einheit oder Baugruppe zu verbinden. Da die Kraft- bzw. Drehmomentübertragung allein den Mitnehmerstiften zufällt, die Schraubbolzen hingegen lediglich die Axialsicherung der Verbindung bewerkstelligen, werden diese nicht durch die Drehmomentübertragung belastet, insbesondere nicht auf Scherung mit der Gefahr von Schraubenbrüchen.

Der zweite unabhängige Anspruch 3 kennzeichnet eine alternative Lösung. Danach ist eine erfindungsgemäße Verbindung entsprechend demselben Oberbegriff wie dem des Anspruchs 1 **dadurch gekennzeichnet, dass** die Verschraubung an den Rotationskörpern unmittelbar ausgebildet ist, indem zumindest ein Abschnitt der Fügeflächenpaarung als Gewindepaarung ausgebildet ist, mittels welcher der äußere Rotationskörper unmittelbar auf den inneren Rationskörper aufschraubbar ist.

Diese Lösung hat gegenüber der zuerst geschilderten Ausführung insbesondere noch den zusätzlichen Vorteil, dass zur axialen Fixierung der drehfest miteinander zu verbindenden Rotationskörper keine gesonderten Schrauborgane wie Schraubenbolzen od. dgl. benötigt werden. Damit entfallen auch die ansonsten dafür erforderlichen zahlreichen Gewindebohrungen in den Rotationskörpern. Bei dieser Lösung sind die Gewindegänge den beiden Rotationskörpern unmittelbar an- bzw. eingeformt. Wenn die Rotationskörper zusammengeschraubt sind und die Mitnehmerstifte eingesetzt sind, kann sich das Gewinde nicht mehr lockern.

Weitere Ausgestaltungen und Merkmale der Erfindung sind den zusätzlichen abhängigen Ansprüchen zu entnehmen. Sie verstehen sich im übrigen auch aus der nachfolgenden Beschreibung mehrer in den Zeichnungen dargestellter Ausführungsformen der Erfindung. In den Zeichnungen zeigen - jeweils am Beispiel einer Flanschnabe:
- Fig. 1: einen hälftigen axialen Längsschnitt durch eine zweiteilige Flanschnabe zur Drehmomentübertragung von Maschinenteilen,
- Fig. 2: eine perspektivische Ansicht der Flanschnabe von Fig. 1 mit Blick auf die Flanschaußenseite,
- Fig. 3: eine vergrößerte Schnittdarstellung des Verbindungsbereichs von Flansch und Nabe der Flanschnabe aus Fig.1,
- Fig. 4: eine Darstellung entsprechend Fig. 3 mit Schnittführung durch einen Mitnehmerstift,
- Fig. 5: eine Darstellung entsprechend Fig. 3 mit Schnittführung durch einen Schraubbolzen zur axialen Fixierung von Flansch und Nabe,
- Fig. 6: eine Fig. 2 entsprechende Perspektivdarstellung einer zweiten Ausführung einer zweiteiligen Flanschnabe mit unmittelbarer gegenseitiger Verschraubung von Flansch und Nabe, und
- Fig. 7-9: vergrößerte Schnittdarstellungen im Verschraubungsbereich von Flansch und Nabe der Flanschnabe aus Fig. 6 mit unterschiedlich ausgestalteten radialen Führungen zwischen Flansch und Nabe.

In den Zeichnungen sind einander funktionell analoge, jedoch unterschiedlich ausgestaltete Bauteile oder Einzelheiten mit denselben Bezeichnungen versehen.

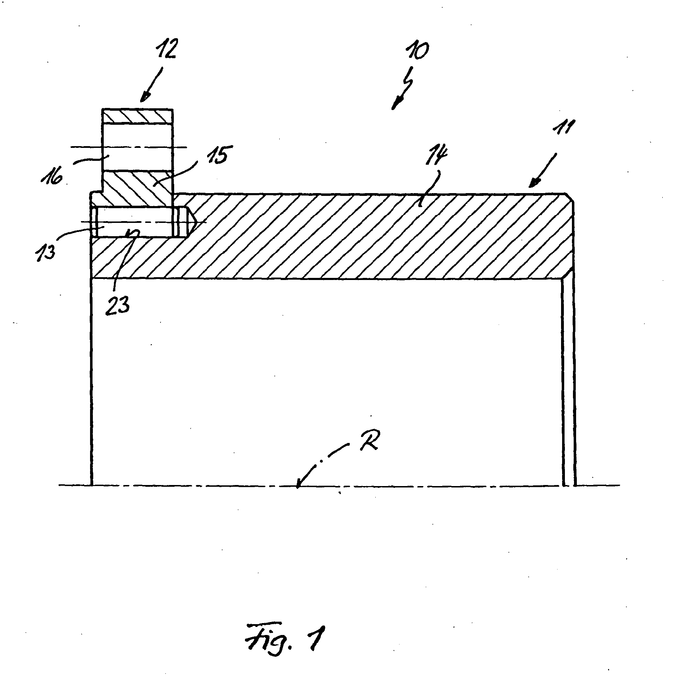

Fig. 1 zeigte eine insgesamt mit 10 bezeichnete Flanschnabe. Sie ist dazu bestimmt, um eine zentrale Rotationsachse R rotierende Bewegungen auszuführen, insbesondere zur Drehmomentübertragung zwischen Maschinenteilen, zwischen denen die Flanschnabe 10 eingebaut ist.

Die Flanschnabe 10 ist grundsätzlich zweiteilig und umfasst einen ersten inneren Rotationskörper 11 sowie einen zweiten äußeren Rotationskörper 12. Diese beiden Rotationskörper 11 und 12 sind über Mitnehmerstifte 13 drehfest miteinander verbunden, wobei die Anordnung der Mitnehmerstifte 13 weiter unten erläutert wird.

Bei Verwendung und Ausgestaltung der um ihre gemeinsame Rotationsachse R drehbaren Rotationskörper 11 und 12 als Flanschnabe 10 weist der erste innere Rotationskörper 11 die Form eines Hohlzylinders auf und bildet den Nabenkörper 14 aus. Der zweite äußere Rotationskörper 12 stellt den zu der Nabe 14 gehörenden Flansch 15 dar. Im Flansch 15 befinden sich außerhalb der Nabe 14 noch in regelmäßiger Umfangsverteilung angeordnete Durchgangsbohrungen 16 zum Durchgriff nicht dargestellter Bolzen oder Gewindebolzen zum Anschluss an ein ebenfalls nicht dargestelltes Maschinen- oder Kupplungsteil.

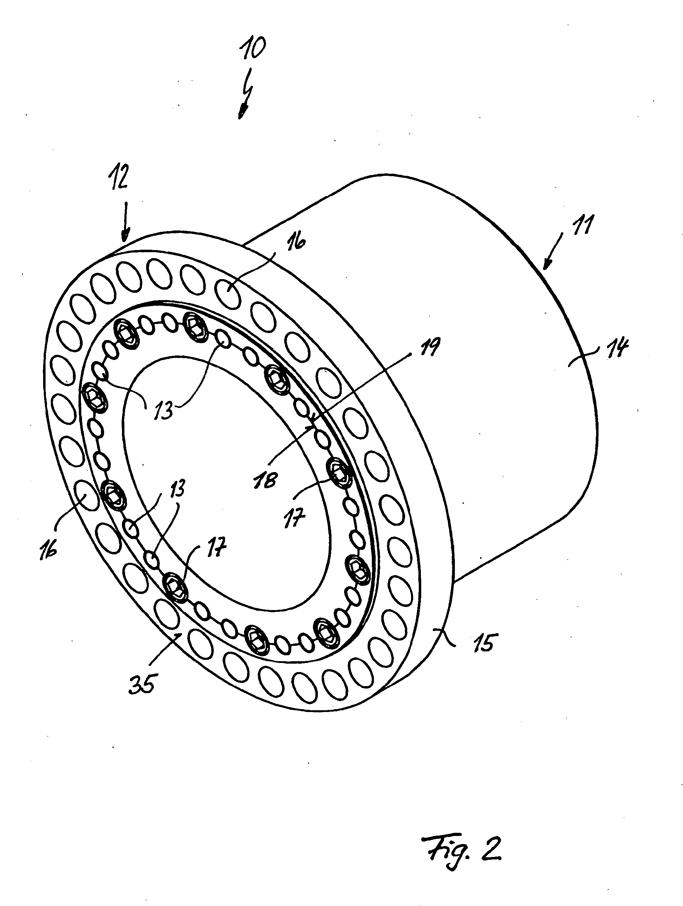

Fig. 2 zeigt die Flanschnabe 10 in schaubildlicher Darstellung mit Sicht auf die Flanschseite und lässt außer den beschriebenen Teilen und Einzelheiten zusätzlich noch Schraubbolzen 17 erkennen, deren Anordnung und Bedeutung ebenfalls weiter unten erläutert wird.

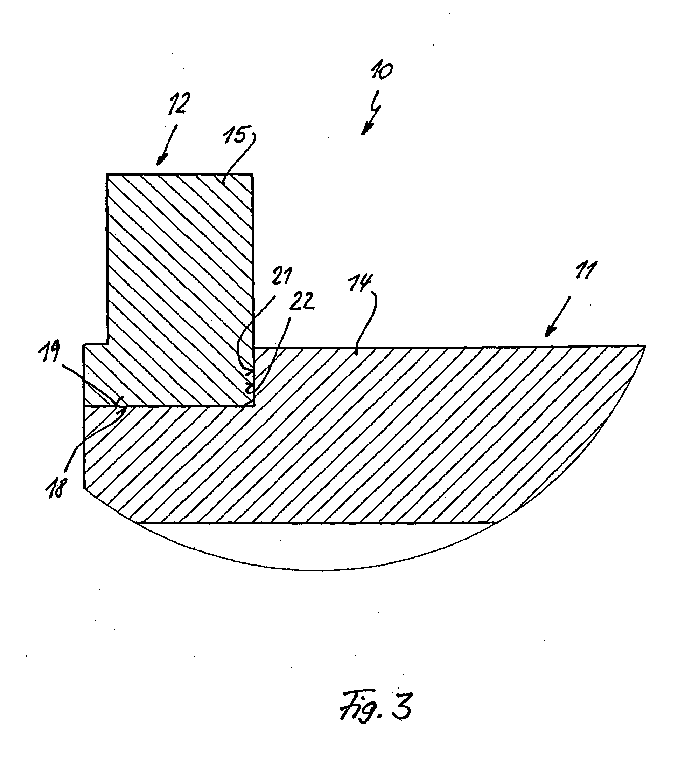

Mit Blick zunächst auf Fig. 3 sei verdeutlicht, dass der den Flansch 15 bildende zweite äußere Rotationskörper 12 im Prinzip als Ringscheibe ausgebildet ist. Diese Ringscheibe weist eine Innenumfangsfläche 18 mit kreisförmigem Umfang auf, die mit einer Außenumfangsfläche 19 des ersten inneren Rotationskörpers 11, also hier der Nabe 14, im Sinne einer Fügeflächenpaarung 18/19 korrespondiert. Zugleich bilden die Flächen 18 und 19 Fügeflächen aus, über die die beiden Rotationskörper 11 und 12 formschlüssig miteinander verbunden sind.

Die Fügeflächenpaarung 18/19 befindet sich gegenüber der Außenumfangsfläche 20 der Nabe 14 auf vermindertem Durchmesser, weil sie auf einer im Durchmesser verjüngten Absatzstufe am Außenende der Nabe 14 angeordnet sind. Weiterer Bestandteil der Absatzstufe ist eine in Axialrichtung weisende Flächenpaarung 21, 22, die einen Axialanschlag zwischen den rotierenden Körpern 11 und 12 ausbildet.

Die in Fig. 3 dargestellte Konfiguration liegt - bezogen auf Fig. 2 - überall dort vor, wo sich die Rotationskörper 11 und 12 unmittelbar längs der radialen Fügeflächen 18 und 19 berühren, in Umfangsrichtung also jeweils zwischen Mitnehmerstiften 13 und/oder Schraubenbolzen 17.

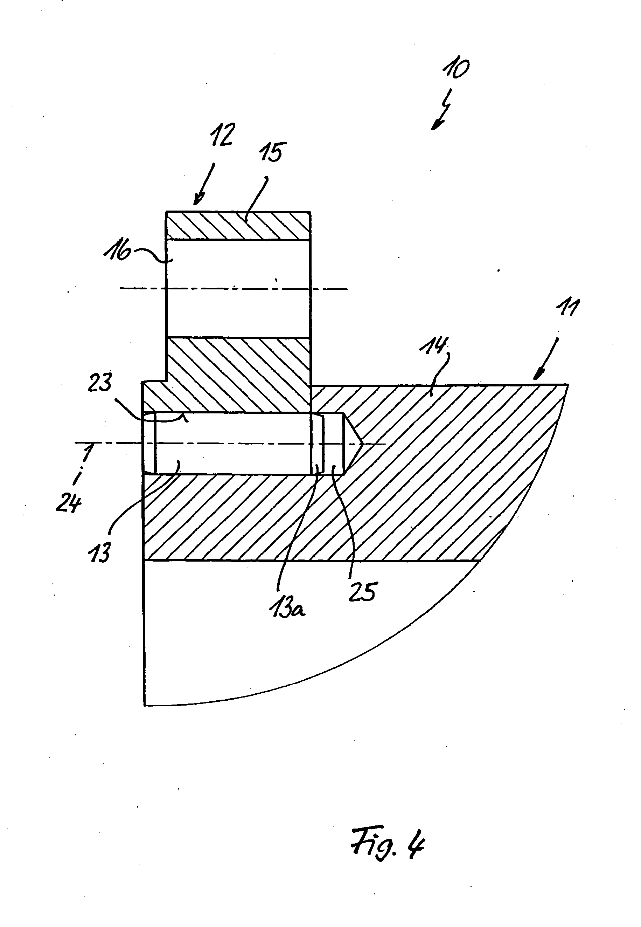

Die Mitnehmerstifte 13 sind in Bohrungen 23 eingetrieben, die je etwa zu ihrem halben Umfang im ersten inneren Rotationskörper 11, der Nabe 14, und im zweiten äußeren Rotationskörper 12, dem Flansch 15, eingebracht sind. Die Längsmittelachsen 24 dieser Bohrungen befinden sich parallel zur Rotationsachse R (Fig. 1) der Anordnung und andererseits auf dem Durchmesser der Fügeflächenpaarung 18/19. Die in Fig.4 mit der Bezugsziffer 25 bezeichnete Bohrung ist die Verlängerung dieser speziellen Bohrung 23 in die Nabe 14 hinein. Die Mitnehmerstifte 13 erstrecken sich bevorzugt aber lediglich im axialen Bereich des äußeren zweiten Rotationskörpers 12, hier also des Flansches 15, wie Fig.4 dies ebenfalls zeigt. Wenn dennoch in der Zeichnung ein Endabschnitt 13a der Mitnehmerstifte 13 in die allein der Nabe 14 zuzurechnende Bohrung 25 ragt, so handelt es sich hierbei lediglich um das entgratete und somit im Durchmesser verjüngte innere Ende des betreffenden Mitnehmerstiftes 13.

Wie Fig.2 zeigt, wechseln beim dargestellten Ausführungsbeispiel in Umfangsrichtung jeweils zwei Bohrungen 23 bzw. Mitnehmerstifte 13 sowie ein Schraubenbolzen 17 einander ab. Diese nach Anzahl und Anordnung in Fig. 2 dargestellte Konfiguration ist jedoch nicht zwingend. Auch andere, wenngleich bevorzugt regelmäßige, Umfangsverteilungen sind denkbar und möglich.

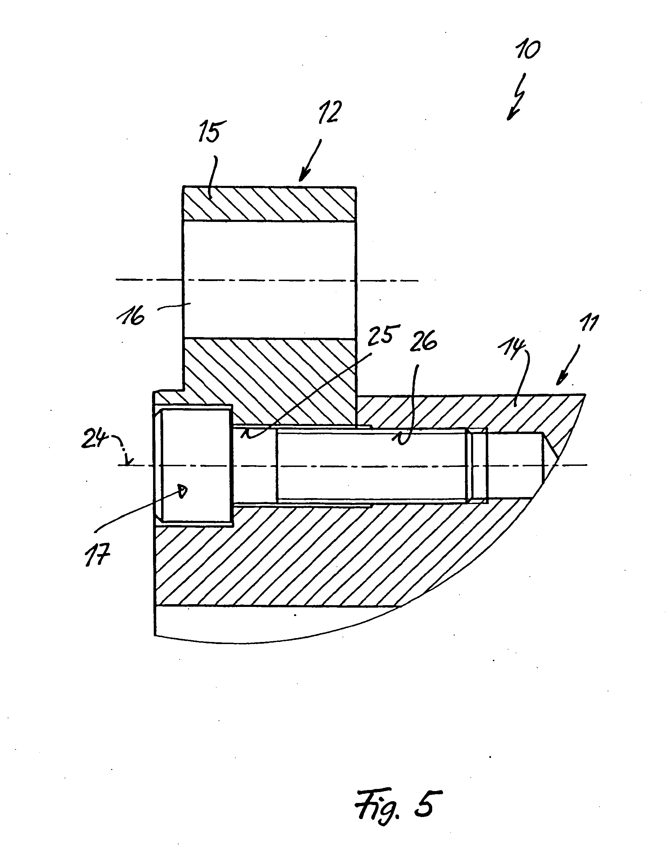

Die in der vergrößerten Darstellung der Fig. 5 nochmals verdeutlichten Schraubenbolzen 17 durchgreifen entsprechende Schraubendurchgangsbohrungen 25 im zweiten äußeren Rotationskörper 12, also hier im Flansch 15, und greifen in ein Innengewinde 26 ein, welches jeweils im ersten inneren Rotationskörper 11, der Nabe 14, eingebracht ist. Die Schraubenbolzen 17 dienen nicht zur Kraft- bzw. Drehmomentübertragung, sondern alleine zur Axialfixierung der beiden Rotationskörper 11 und 12, also zur Festlegung des Flansches 15 an der Stirnseite der Nabe 14.

Bei der im folgenden beschriebenen zweiten Ausführungsform kann auf diese Schraubenbolzen 17 verzichtet werden.

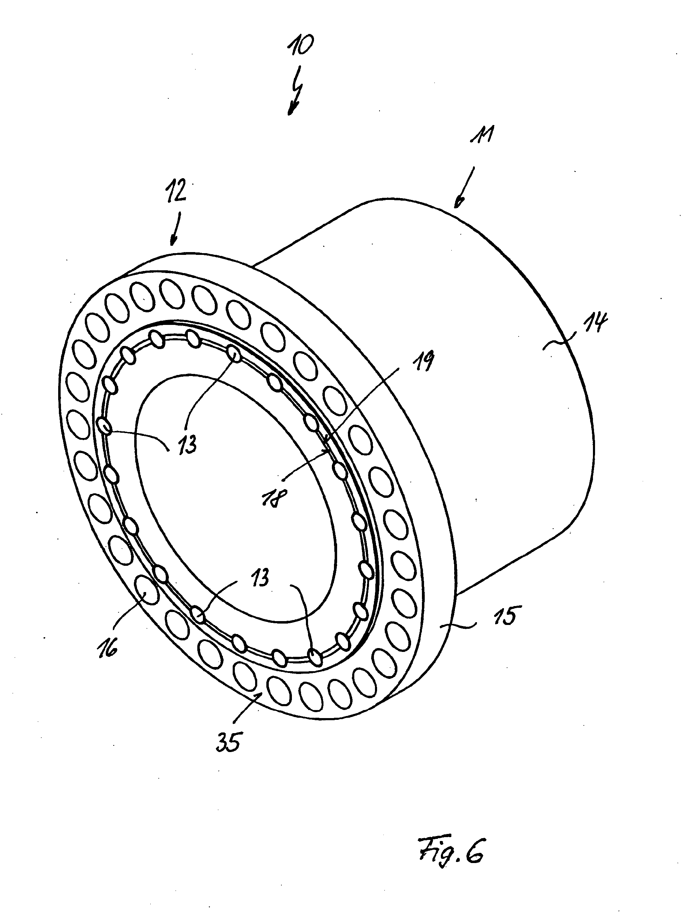

Zunächst entspricht die im Schaubild der Fig.6 dargestellte zweite Ausführungsform insoweit der Fig. 1, als auch hier ein als Nabe 14 ausgebildeter erster innerer Rotationskörper 11 wie auch ein als Flansch 15 ausgebildeter zweiter äußerer Rotationskörper 12 über axial gerichtete Mitnehmerstifte 13 drehfest miteinander verbunden sind. Anstelle der in Fig. 3 gezeigten Fügeflächenanordnung 18/19, die dort als glattflächige Innen- bzw. Außenumfangsflächen gestaltet sind, sind hier aber die Fügeflächen 18/19 als Gewindepaarung ausgeführt.

Auf eine im Außendurchmesser verjüngten Absatzstufe weist die Nabe 14 als erster innerer Rotationskörper 11 einen Außengewindeabschnitt 27 und der Flansch 15 als zweiter äußerer Rotationskörper 12 einen korrespondierenden, im Wesentlichen entsprechend langen Innengewindeabschnitt 28 auf. Deshalb können die beiden Rotationskörper 11 und 12 unmittelbar und ohne Zuhilfenahme besonderer Schraubenbolzen miteinander verschraubt werden. Somit wird der Flansch 15 auf die Nabe 14 aufgeschraubt, bis die beiden Körper an den wiederum mit 21 und 22 bezeichneten axialweisenden Anschlagflächen zur Anlage aneinander geraten. Nach diesem Verschrauben werden die Mitnehmerstifte 13 wie vorbeschrieben eingebracht. Da diese die Drehbeweglichkeit zwischen den Teilen 11 bzw. 14 und 12 bzw. 15 hemmen, kann sich folglich auch die Schraubverbindung nicht mehr lösen.

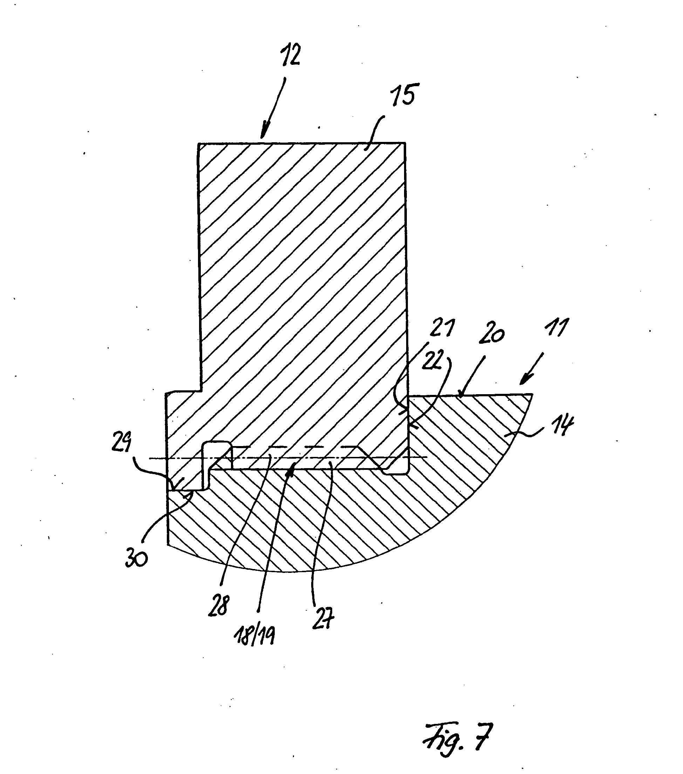

Wie Fig. 7 zeigt, befindet sich die Gewindepaarung 27/28 auf einem geringeren Durchmesser als der Außenumfang 20 der Nabe 14, also entsprechend den umlaufenden Fügeflächen 18/19 der ersten Ausführungsform auf einer im Durchmesser verjüngten Absatzstufe.

Bei der Ausführungsform nach Fig. 7 befindet sich weiter außen noch eine weitere, nochmals abgesetzte Absatzstufe verjüngten Durchmessers. Hier sind auf einem relativ kurzen axialen Abschnitt die Rotationskörper 11 und 12 über radiale Umfangsflächen 29 und 30 gleitend geführt und radial abgestützt.

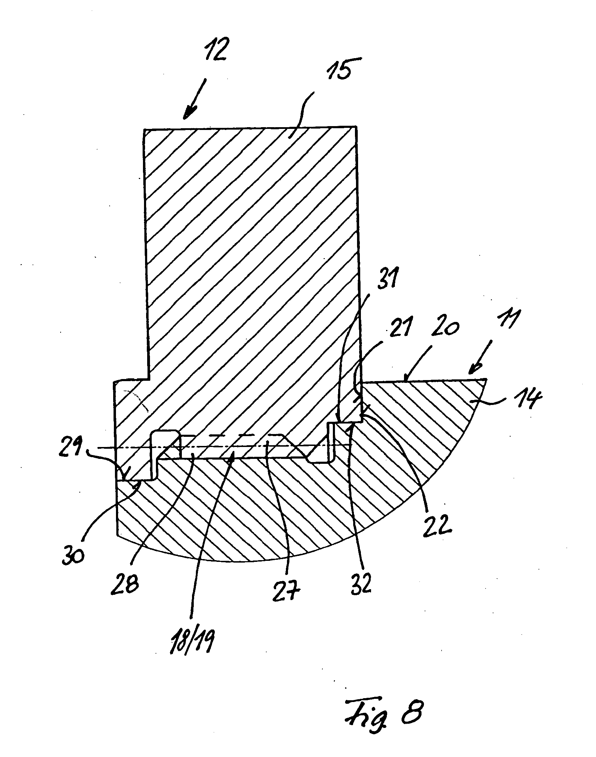

Eine etwas anders geartete Führung und Abstützung zeigt Fig. 8, in der zusätzlich zu der zuletzt beschriebenen Führungsflächenanordnung 29/30 auf der anderen Seite des Gewindes, also hier innenliegend, noch eine weitere radiale Führung mit umlaufenden Führungsflächen 31 und 32. Im Unterschied zu Fig. 7 ist die dort vorhandene einzige innere Stufe in zwei etwa halb so hohe Stufen unterteilt. Gleichwohl ist der axiale Anschlag durch die auch hier vorhandenen axial weisenden Anschlagringflächen 21 und 22 gewährleistet.

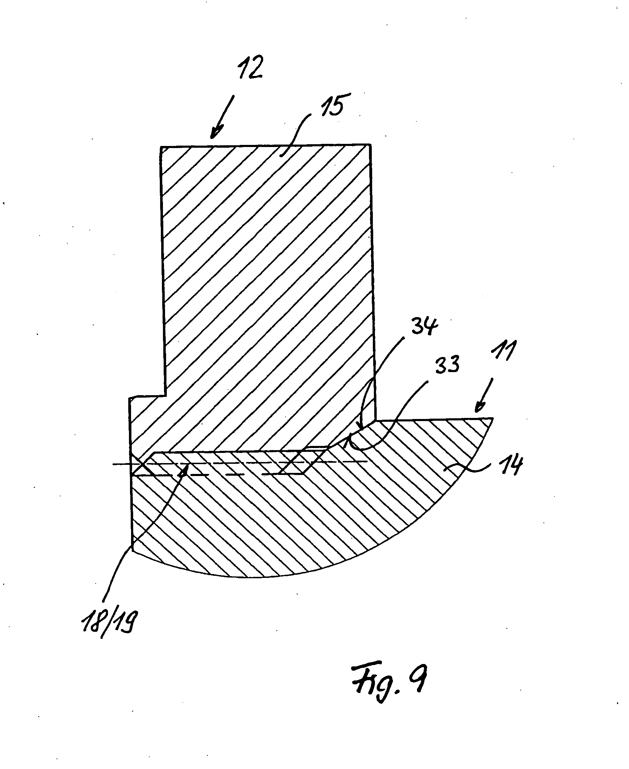

Eine dritte Führungs- und Anschlagvariante zeigt Fig. 9. Hier bildet der äußere zweite Rotationskörper 12 (Flansch 15) an seiner inneren, zum ersten inneren Rotationskörper 11 (Nabe 14) weisenden Innenumfangsfläche eine Schrägfläche 33 aus. An derselben Stelle weist der erste innere Rotationskörper 11, die Nabe 14, eine korrespondierende Schrägfläche 34 auf. Aufgrund der schrägen Anordnung der Flächenpaarung 33/34 dient diese gleichzeitig zur axialen Führung als auch zur radialen Abstützung der beiden Flanschnabenteile 11, 12 bzw. 14 bzw. 15.

Bei den Mitnehmerstiften 13 kann es sich - wie dargestellt - um zylindrische Stifte handeln, Alternativ ist es möglich, Kegelstifte zu verwenden. Entsprechend müssten dann die Bohrungen (gleichzeitig ausgeführte Halbbohrungen in 11 und 12) vor dem Einsatz der konischen Stifte konisch aufgerieben werden.

Anordnungen der dargestellten und beschriebenen Art, insbesondere Flanschnaben 10 werden häufig in Kupplungssystemen eingesetzt, z.B. auch bei Membrankupplungen. Die Membrane sind als dünne Ringscheiben ausgebildet, die beispielsweise mit den Flanschen 15 verschraubt werden. Daher ist es wünschenswert, die in den Fig. 2 und 6 mit 35 bezeichneten Außenstimflächen der Flansche 12 mit einer haftreibungserhöhenden Beschichtung, z.B. aus Korund oder Diamantstaub, zu versehen. Dies ermöglicht eine Mikroformschlussverbindung zwischen Flansch und Membran. Bei einstückigen Flanschnaben war dies bislang nicht oder nur unter sehr erschwerten Bedingungen möglich. Da nunmehr der Flansch 12 als einfacher Ringkörper ausgebildet sein kann, ist es ohne weiteres möglich, ihn vor dem Zusammenbau mit der Nabe 14 auf einfache Weise an seiner Außenfläche 35 derart auszurüsten.

Was die in den Fig. 7 bis 9 dargestellten Ausgestaltungen und/oder Anordnungen der Fügeflächen 21/22; 29/30; 31/32; 33/34 betrifft, sind deren Kombinationen untereinander möglich. So kann insbesondere die Ausführung der Fig. 7 mit der von Fig. 9 unmittelbar kombiniert werden. Auch ist eine Anordnung von Schrägflächen 33, 34 bei einer Doppelstufenanordnung ähnlich der in Fig. 8 gestaltbar, wobei etwa die dortigen Flächen 31, 32 schräg verlaufen könnten. Bei der in Fig. 8 gezeigten Ausführung könnte die frontseitige Flächenanordnung 29, 30 weggelassen werden. Insoweit also seien die drei dargestellten Beispiele zwar als besonders vorteilhaft, aber nicht als abschließend zu verstehen.

## Patentansprüche

1. Drehfeste Verbindung zweier um eine gemeinsame Rotationsachse (R) drehbarer Körper, insbesondere Flanschnabe (10) für Kupplungen zur Drehverbindung von Maschinenteilen, umfassend einen ersten inneren Rotationskörper (11) und einen damit über eine Fügeflächenpaarung (18/19) miteinander zu verbindenden bzw. verbundenen zweiten äußeren Rotationskörper (12), wobei zur Drehmomentübertragung Mitnehmerstifte (13) vorgesehen sind, die in zur Rotationsachse (R) paralleler Richtung verlaufende Bohrungen (23) eingepresst sind, welche im Bereich der Fügeflächenpaarung (18/19) in den beiden Rotationskörpern (11, 12) jeweils etwa zum halben Umfang ausgebildet sind, und wobei eine in Richtung der Rotationsachse (R) wirkende Verschraubung die beiden Rotationskörper (11, 12) axialfest zueinander sichert, **dadurch gekennzeichnet, dass** die Fügeflächenpaarung (18/19) als zylindrische Flächenpaarung ausgebildet ist und als Verschraubung Schraubbolzen (17) vorgesehen sind, die, zu den Mitnehmerstifte (13) umfangsversetzt, in als Gewindebohrungen ausgebildete Axialbohrungen eingeschraubt sind, welche gleichfalls in den beiden Rotationskörpern (11,12) ausgebildet sind.

2. Verbindung nach Anspruch 1, **dadurch gekennzeichnet, dass** die Schraubbolzen (17) auf demselben Teilkreis wie die Mitnehmerstifte (13) angeordnet sind.

3. Verbindung nach dem Oberbegriff des Anspruchs 1, **dadurch gekennzeichnet, dass** die Verschraubung an den Rotationskörpern (11, 12) unmittelbar ausgebildet ist, indem zumindest ein Abschnitt der Fügeflächenpaarung (18/19) als Gewindepaarung (27/28) ausgebildet ist, mittels welcher der äußere Rotationskörper (12) unmittelbar auf den inneren Rationskörper (11) aufschraubbar ist.

4. Verbindung nach Anspruch 3, **dadurch gekennzeichnet, dass** in Richtung der Rotationsachse (R) der Verbindung betrachtet zumindest zu einer Seite der Gewindepaarung (27/28) eine zylindrische bzw. konische sowie glattflächige Fügeflächenpaarung (21/22; 29/30; 31/32; 33/34) als axiale und/oder radiale Führungsabstützung der beiden Rotationskörper (11, 12) gegeneinander vorgesehen sind.

5. Verbindung nach Anspruch 4, **dadurch gekennzeichnet, dass** der erste innere Rotationskörper (11) an zumindest einem seiner beiden axialen Endbereiche wenigstens eine Absatzstufe mit verjüngtem Außendurchmesser aufweist, auf die ein zweiter äußerer Rotationskörper (12) aufsetzbar bzw. aufschraubbar ist.

6. Verbindung nach Anspruch 4 oder 5, **dadurch gekennzeichnet, dass** die Rotationskörper (11, 12) doppelte Absatzstufen ausbilden, deren radial innerer die Gewindepaarung (27/28) zugeordnet ist, während die radial äußeren einen Axialanschlag (21, 22) sowie radiale Führungs- bzw. Passflächenpaarungen (31/32) ausbilden.

7. Verbindung nach Anspruch 4 oder 5, **dadurch gekennzeichnet, dass** die Rotationskörper (11, 12) konisch verlaufende Abstufungen ausbilden, deren zueinander weisende Flächen (33, 34) einen Axialanschlag sowie zugleich eine radiale Führungs- bzw. Passflächenpaarung ausbilden.

8. Verbindung nach Anspruch 4 oder 5, **dadurch gekennzeichnet, dass** der erste inneren Rotationskörper (11) an seinem axial äußersten Endbereich eine Absatzstufe mit verjüngtem Außendurchmesser aufweist, auf dem sich ein äußerer Abschnitt des zweiten äußeren Rotationskörpers (12) radial abstützt, so dass die Umfangsflächen der Rotationskörperabschnitte eine radiale Führungs- bzw. Passflächenpaarung (29/30) ausbilden.

9. Verbindung nach Anspruch 4 oder 5, umfassend eine Kombination der Merkmale der Ansprüche 6 und 8.

10. Verbindung nach Anspruch 4 oder 5, umfassend eine Kombination der Merkmale der Ansprüche 7 und 8.

11. Verbindung nach einem der vorherigen Ansprüche, **dadurch gekennzeichnet, dass** der erste innere Rotationskörper (11) als hohlzylindrischer Körper ausgebildet ist.

12. Verbindung nach einem der vorherigen Ansprüche, **dadurch gekennzeichnet, dass** der zweite äußere Rotationskörper (12) als Ringscheibe ausgebildet ist.

13. Verbindung nach einem der vorherigen Ansprüche, **dadurch gekennzeichnet, dass** der erste innere Rotationskörper (11) mit dem darauf aufgesetzten bzw. aufgeschraubten zweiten äußeren Rotationskörper (12) eine Flanschnabe (10) ausbildet.

14. Verbindung nach einem der Ansprüche 1 bis 3, **dadurch gekennzeichnet, dass** sich die Mitnehmerstifte (13) im wesentlichen nur innerhalb der axialen Ausdehnung des zweiten äußeren Rotationskörpers (12) erstrecken.

15. Verbindung nach einem der Ansprüche 1 bis 3 oder 14, **dadurch gekennzeichnet, dass** die Mitnehmerstifte (13) zylindrische Mitnehmerstifte sind.

16. Verbindung nach einem der Ansprüche 1 bis 3 oder 14, **dadurch gekennzeichnet, dass** die Mitnehmerstifte (13) konische Mitnehmerstifte und die Bohrungen konisch aufgeriebene zylindrische Bohrungen sind.

17. Verbindung nach Anspruch 1 oder einem der darauf folgenden, **dadurch gekennzeichnet, dass** zumindest eine in Axialrichtung weisende Außenoberfläche (35) des zweiten äußeren Rotationskörper (12) mit einer haftreibungserhöhenden Beschichtung versehen ist.

## Claims

1. Rotationally fixed connection of two bodies that are rotatable about a common axis of rotation (R), in particular flange hub (10) for couplings for the rotational connection of machine parts, comprising a first inner rotational body (11) and a second outer rotational body (12) that are to be connected and/or are connected to one another by a joining surface pairing (18/19), wherein for torque transmission driving pins (13) are provided, which are press-fitted into bores (23), which extend in a direction parallel to the axis of rotation (R) and which are formed in the region of the joining surface pairing (18/19) with approximately one half in each of the two rotational bodies (11, 12), and wherein a screw connection acting in the direction of the axis of rotation (R) secures the two rotational bodies (11, 12) in an axially fixed manner relative to one another, **characterized in that** the joining surface pairing (18/19) takes the form of a cylindrical surface pairing and as a screw connection screw bolts (17) are provided, which are screwed peripherally offset relative to the driving pins (13) into axial bores in the form of threaded bores that are likewise formed in the two rotational bodies (11, 12).

2. Connection according to claim 1, **characterized in that** the screw bolts (17) are disposed on the same reference circle as the driving pins (13).

3. Connection according to the preamble of claim 1, **characterized in that** the screw connection is formed directly on the rotational bodies (11, 12) **in that** at least one portion of the joining surface pairing (18/19) takes the form of a thread pairing (27/28), by means of which the outer rotational body (12) may be screwed directly onto the inner rotational body (11).

4. Connection according to claim 3, **characterized in that**, viewed in the direction of the axis of rotation (R) of the connection, at least to one side of the thread pairing (27/28) a cylindrical and/or conical as well as smooth-surfaced joining surface pairing (21/22; 29/30; 31/32; 33/34) are provided as axial and/or radial guiding support of the two rotational bodies (11, 12) against one another.

5. Connection according to claim 4, **characterized in that** the first inner rotational body (11) at at least one of its two axial end regions has at least one shoulder step of tapered outside diameter, onto which a second outer rotational body (12) may be mounted and/or screwed.

6. Connection according to claim 4 or 5, **characterized in that** the rotational bodies (11, 12) form double shoulder steps, with the radially inner one of which the thread pairing (27/28) is associated, while the radially outer ones form an axial stop (21, 22) as well as radial guiding- and/or fitting-surface pairings (31/32).

7. Connection according to claim 4 or 5, **characterized in that** the rotational bodies (11, 12) form conically extending graduations, of which the surfaces (33, 34) facing one another form an axial stop as well as simultaneously a radial guiding- and/or fitting-surface pairing.

8. Connection according to claim 4 or 5, **characterized in that** the first inner rotational body (11) at its axially outermost end region has a shoulder step of tapered outside diameter, on which an outer portion of the second outer rotational body (12) is radially supported, so that the circumferential surfaces of the rotational body portions form a radial guiding- and/or fitting-surface pairing (29/30).

9. Connection according to claim 4 or 5, comprising a combination of the features of claims 6 and 8.

10. Connection according to claim 4 or 5, comprising a combination of the features of claims 7 and 8.

11. Connection according to one of the preceding claims, **characterized in that** the first inner rotational body (11) takes the form of a hollow cylindrical body.

12. Connection according to one of the preceding claims, **characterized in that** the second outer rotational body (12) takes the form of an annular disk.

13. Connection according to one of the preceding claims, **characterized in that** the first inner rotational body (11) together with the second outer rotational body (12) mounted and/or screwed thereon forms a flange hub (10).

14. Connection according to one of claims 1 to 3, **characterized in that** the driving pins (13) extend substantially only inside the axial extent of the second outer rotational body (12).

15. Connection according to one of claims 1 to 3 or 14, **characterized in that** the driving pins (13) are cylindrical driving pins.

16. Connection according to one of claims 1 to 3 or 14, **characterized in that** the driving pins (13) are conical driving pins and the bores are conically reamed cylindrical bores.

17. Connection according to claim 1 or one of the claims following claim 1, **characterized in that** at least one axially facing outer surface (35) of the second outer rotational body (12) is provided with a coating that increases static friction.

## Revendications

1. Dispositif de liaison assujettie en rotation de deux corps rotatifs, en particulier des moyeux de bride (10), sur un même un axe de rotation (R) commun, pour des accouplements devant assurer la liaison de rotation de parties de machines, comprenant un premier corps de rotation intérieur (11) et un deuxième corps de rotation extérieur (12), devant lui être relié ou lui étant relié, par l'intermédiaire d'un appairage de surfaces de jointoiement (18/19), sachant que, pour assurer la transmission d'un couple de rotation, sont prévues des goupilles d'entraînement (13) enfoncées dans des perçages (23) s'étendant dans une direction parallèle à l'axe de rotation (R), perçages réalisés dans la zone de l'appairage de surfaces de jointoiement (18/19), dans les deux corps de rotation (11, 12), chaque fois à peu près à demi périphérie, et sachant qu'un vissage, agissant en direction de l'axe de rotation (R), assure l'un par rapport à l'autre, de façon axialement rigide, les deux corps de rotation (11, 12), **caractérisé en ce que** l'appairage de surfaces de jointoiement (18/19) est réalisé sous forme d'appairage de surfaces cylindrique et que sont prévus, en tant que vissage, des boulons filetés (17), implantés de façon décalée circonférentiellement par rapport aux goupilles d'entraînement (13), vissés dans des perçages axiaux réalisés sous forme de trous taraudés, réalisés pareillement dans les deux corps de rotation (11, 12).

2. Dispositif de liaison selon la revendication 1, **caractérisé en ce que** les boulons filetés (17) sont disposés sur le même cercle partiel que les goupilles d'entraînement (13).

3. Dispositif de liaison selon le préambule de la revendication 1, **caractérisé en ce que** le vissage est réalisé directement sur les corps de rotation (11, 12), **en ce qu'**au moins un tronçon de l'appairage de surfaces de jointoiement (18/19) est réalisé sous forme d'appairage fileté (27/28), au moyen duquel le corps de rotation extérieur (12) est susceptible d'être vissé directement sur le corps de rotation intérieur (11).

4. Dispositif de liaison selon la revendication 3, **caractérisé en ce que**, en observant en direction de l'axe de rotation (R) de la liaison, au moins d'un côté de l'appairage fileté (27/28) est prévu un appairage de surfaces de jointoiement (21/22 ; 29/30 ; 31/32 ; 33/34) cylindrique ou conique ainsi qu'à surface lisse, en tant que soutien de guidage axial et/ou radial des deux corps de rotation (11, 12) l'un contre l'autre.

5. Dispositif de liaison selon la revendication 4, **caractérisé en ce que** le premier corps de rotation intérieur (11) présente, sur au moins l'une de ses deux zones d'extrémité axiales, un gradin en décrochement à diamètre extérieur allant en diminuant, sur lequel un deuxième corps de rotation extérieur (12) est susceptible d'être placé ou d'être vissé.

6. Dispositif de liaison selon la revendication 4 ou 5, **caractérisé en ce que** les corps de rotation (11, 12) constituent des gradins en décrochement doublés, auxquels l'appairage fileté (27/28) est associé radialement intérieurement, tandis qu'ils constituent, radialement extérieurement, une butée axiale (21, 22) ainsi que des appairages de surfaces de guidage ou d'ajustement (31/32) radiaux.

7. Dispositif de liaison selon la revendication 4 ou 5, **caractérisé en ce que** les corps de rotation (11, 12) constituent des gradins en décrochement d'allure conique, dont les surfaces (33, 34), tournées les unes vers les autres, constituent une butée axiale, ainsi que, en même temps, un appairage de surfaces de guidage ou d'ajustement.

8. Dispositif de liaison selon la revendication 4 ou 5, **caractérisé en ce que** le premier corps de rotation intérieur (11) présente, sur sa zone d'extrémité axialement la plus extérieure, un gradin en décrochement à diamètre extérieur allant en diminuant, sur lequel prend appui radialement un tronçon extérieur du deuxième corps de rotation extérieur (12), de manière que les surfaces périphériques des tronçons de corps de rotation constituent un appairage de surfaces de guidage ou d'ajustement (29/30 radial.

9. Dispositif de liaison selon la revendication 4 ou 5, comprenant une combinaison des caractéristiques des revendications 6 et 8.

10. Dispositif de liaison selon la revendication 4 ou 5, comprenant une combinaison des caractéristiques des revendications 7 et 8.

11. Dispositif selon l'une des revendications précédentes, **caractérisé en ce que** le premier corps de rotation intérieur (11) est réalisé sous forme de corps cylindrique creux.

12. Dispositif selon l'une des revendications précédentes, **caractérisé en ce que** le deuxième corps de rotation extérieur (12) est réalisé sous forme de disque annulaire.

13. Dispositif selon l'une des revendications précédentes, **caractérisé en ce que** le premier corps de rotation intérieur (11) constitue, avec le deuxième corps de rotation extérieur (12) placé dessus ou vissé dessus, un moyeu de bride (10).

14. Dispositif selon l'une des revendications 1 à 3, **caractérisé en ce que** les goupilles d'entraînement (13) s' étend dent sensiblement uniquement dans les limites de la dimension axiale du deuxième corps de rotation extérieur (12).

15. Dispositif selon l'une des revendications 1 à 3 ou 14, **caractérisé en ce que** les goupilles d'entraînement (13) sont des goupilles d'entraînement cylindriques.

16. Dispositif selon l'une des revendications 1 à 3 ou 14, **caractérisé en ce que** les goupilles d'entraînement (13) sont des goupilles d'entraînement coniques et que les perçages sont des perçages cylindriques ayant subi un alésage conique.

17. Dispositif de liaison selon la revendication 1 ou l'une des revendications suivantes, **caractérisé en ce qu'**au moins une surface extérieure (35), tournée en direction axiale, du deuxième corps de rotation extérieur (12) est munie d'un revêtement augmentant l'adhérence statique.
